# EUROPEAN PATENT SPECIFICATION

(11) **EP 4 080 656 B1**
(45) Date of publication and mention of the grant of the patent: **03.09.2025**
(21) Application number: 21880520.8
(22) Date of filing: 13.10.2021
(51) Int. Cl.: H01M 50/20, H01M 50/24, H01M 50/184, H01M 50/186, H01M 50/249, H01M 50/271, H01M 50/289

(54) **BATTERY PACK AND VEHICLE COMPRISING BATTERY PACK**
BATTERIEPACK UND FAHRZEUG MIT DEM BATTERIEPACK
BLOC-BATTERIE ET VÉHICULE COMPRENANT UN BLOC-BATTERIE

(30) Priority: 13.10.2020 KR 20200132087
(43) Date of publication of application: 26.10.2022
(73) Proprietor: LG Energy Solution, Ltd., Seoul 07335 (KR)
(72) Inventor: KIM, Young-Jin, Daejeon 34122 (KR); SHIN, Yong-Shik, Daejeon 34122 (KR); SON, Do-Wung, Daejeon 34122 (KR); YUN, Seung-Hyun, Daejeon 34122 (KR); JUNG, Byeong-Yoon, Daejeon 34122 (KR); CHOI, Sung-Man, Daejeon 34122 (KR)
(74) Representative: Plasseraud IP
(86) International application number: PCT/KR2021/014152
(87) International publication number: WO 2022/080873

(56) References cited:
- EP-A1- 2 650 572
- EP-A1- 3 396 734
- JP-A- 2012 097 896
- JP-A- 2014 103 120
- JP-A- 2014 175 123
- JP-A- 2015 158 210
- JP-A- 2019 075 329
- JP-B2- 6 020 298
- KR-A- 20170 098 583
- KR-A- 20200 012 865

## Description

### TECHNICAL FIELD

The present disclosure relates to a battery pack and a vehicle including the battery pack.

The present application claims priority to Korean Patent Application No. 10-2020-0132087 filed on October 13, 2020 in the Republic of Korea.

### BACKGROUND ART

Secondary batteries that have high ease of application according to product groups and have electrical characteristics such as high energy density, etc. are universally applied to not only portable devices, but also electric vehicles (EVs) or hybrid vehicles (HEVs) driven by an electric drive source. These secondary batteries are attracting attention as a new energy source for improving eco-friendliness and energy efficiency in that not only the primary advantage of being able to dramatically reduce the use of fossil fuels but also the fact that no by-products are generated from the use of energy.

The types of secondary batteries that are currently widely used include a lithium ion battery, a lithium polymer battery, a nickel cadmium battery, a nickel hydrogen battery, a nickel zinc battery, etc. The operating voltage of such a unit secondary battery cell, that is, a unit battery cell, is about 2.5 V to about 4.2 V. Accordingly, when a higher output voltage is required, a plurality of battery cells are connected in series to configure a battery pack. In addition, a plurality of battery cells are connected in parallel to configure a battery pack according to the charge/discharge capacity required for the battery pack. Accordingly, the number of battery cells included in the battery pack may be set in various ways according to a required output voltage or charge/discharge capacity.

Meanwhile, when a battery pack is configured by connecting a plurality of battery cells in series/parallel, a method of configuring the battery pack by first configuring a battery module including at least one battery cell, and adding other components using the at least one battery module is common.

The conventional battery pack is configured to include a case tray supporting at least one battery module, and a case cover coupled to the case tray through at least one fastening member to package the at least one battery module.

Here, coupling through the at least one fastening member is made in edges of the case tray and the case cover. And, such a conventional battery pack is mounted on a structure such as a vehicle as a fuel source of a structure such as a vehicle, etc.

Meanwhile, in the case of the conventional battery pack, when the case tray and the case cover are coupled to each other through at least one fastening member, a sealing gasket disposed between the case tray and the case cover is assembled together with the case tray and the case cover, to realize a watertight structure.

However, in the conventional battery pack, upon such coupling of the case tray and the case cover, even if a position of the sealing gasket is misaligned, since it is difficult to check misalignment, there is a problem in a high risk of an erroneous assembly.

In addition, in the conventional battery pack, there is a problem in that the sealing performance of the entire battery pack deteriorates during the erroneous assembly of the sealing gasket.

Therefore, it is required to seek a solution to increase the assembly accuracy of the sealing gasket for realizing a solid watertight structure.

Further prior art is described in EP 2 650 572 A1, EP 3 396 734 A1 and JP 6 020 298 B2.

### DISCLOSURE

### Technical Problem

The present disclosure is designed to solve the problems of the related art, and therefore the present disclosure is directed to providing a battery pack capable of increasing an assembly accuracy of a sealing gasket for realizing a solid watertight structure, and a vehicle including the battery pack.

The present disclosure is also directed to providing a battery pack capable of effectively preventing deterioration of sealing performance even if an erroneous assembly of the sealing gasket occurs and a vehicle including the battery pack.

### Technical Solution

In one aspect of the present disclosure, there is provided a battery pack including at least one battery module including at least one battery cell; a case tray configured to support the at least one battery module; a case cover coupled to the case tray so that the at least one battery module is packaged; and a sealing gasket disposed between the case tray and the case cover to prevent penetration of moisture or foreign substances into the battery module, and including at least one position guider configured to guide positioning between the case tray and the case cover when the case tray and the case cover are coupled to each other, wherein the sealing gasket is disposed between an edge of the case tray and an edge of the case cover, wherein the sealing gasket includes a gasket band formed to correspond to shapes of the edge of the case tray and the edge of the case cover; a plurality of fastening portions formed on the gasket band and through which fastening members for the coupling of the case tray and the case cover pass; and the at least one position guider provided between the plurality of fastening portions and configured to protrude from the gasket band in a direction perpendicular to the longitudinal direction of the gasket band by a predetermined length.

The sealing gasket may further include an elastic bead formed on an outer circumferential surface of the gasket band and elastically deformable when the case tray and the case cover are coupled to each other.

The elastic bead may include a band bead formed on the outer circumferential surface of the gasket band; and a fastening bead formed on outer circumferential surfaces of the plurality of fastening portions.

The at least one position guider may be spaced apart from the band bead so as not to interfere with the band bead.

The band bead may be formed in a longitudinal direction of the gasket band.

The at least one position guider may have a protrusion length that is at least same as protrusion lengths of the plurality of fastening portions so as not to exceed edge lines of the case tray and the case cover.

The position guider may be provided in plurality, and the plurality of position guiders may be provided as at least one or more position guiders between the plurality of fastening portions.

In another aspect of the present disclosure, there is provided a vehicle including at least one battery pack according to the embodiments described above.

### Advantageous Effects

According to various embodiments as described above, a battery pack capable of increasing an assembly accuracy of a sealing gasket for realizing a solid watertight structure, and a vehicle including the battery pack, may be provided.

In addition, according to various embodiments as described above, a battery pack capable of effectively preventing deterioration of sealing performance even if an erroneous assembly of the sealing gasket occurs and a vehicle including the battery pack may be provided.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for explaining a battery pack according to an embodiment of the present disclosure.
FIG. 2 is a view for explaining a sealing gasket of the battery pack of FIG. 1.
FIG. 3 is an enlarged view of a main part of the sealing gasket of FIG. 2.
FIG. 4 is a view for explaining a sealing gasket according to another embodiment of the present disclosure.
FIG. 5 is a view for explaining a sealing gasket according to another embodiment of the present disclosure.
FIGS. 6 and 7 are views for explaining an assembly process of a sealing gasket when a case tray and a case cover of the battery pack of FIG. 1 are coupled to each other.
FIG. 8 is a view for explaining a vehicle according to an embodiment of the present disclosure.

### MODE FOR DISCLOSURE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure. In addition, in order to help the understanding of the invention, the accompanying drawings are not shown in actual scale, but dimensions of some components may be exaggeratedly shown.

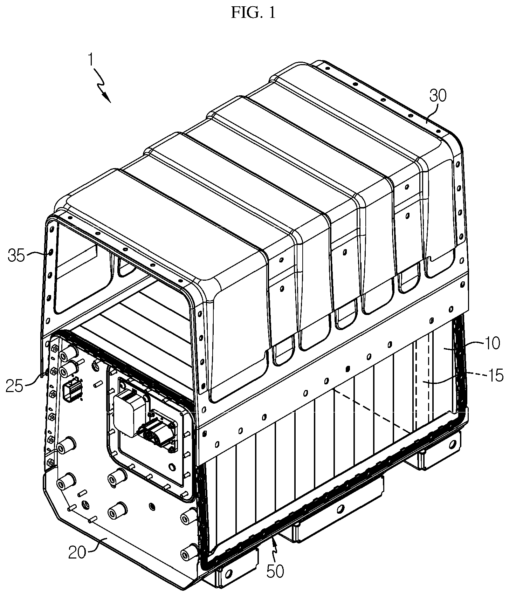

FIG. 1 is a view for explaining a battery pack according to an embodiment of the present disclosure.

Referring to FIG. 1, a battery pack 1 is provided, as an energy source, in a vehicle such as an electric vehicle or a hybrid vehicle. The battery pack 1 is mounted on a body of the vehicle, and is mounted on a lower portion of the body of the vehicle.

In addition, the battery pack 1 is possible to be mounted on a position of the conventional oil tank in place of an oil tank. For example, in the case of an electric (EV) truck or an EV bus, the battery pack 1 may be mounted on a position of an oil tank in a previous general truck or general bus in place of an oil tank

Such a battery pack 1 is configured to include a battery module 10, a case tray 20, a case cover 30, and a sealing gasket 50.

The battery module 10 may be provided in at least one or in plurality. The battery module 10 may include a battery cell 15.

The battery cell 15 is provided in at least one or more. Such a battery cell 15 is a secondary battery, and may be provided, as a pouch type secondary battery, a square type secondary battery, or a cylindrical type secondary battery. Hereinafter, in the present embodiment, the battery cell 15 will be described as being provided as a pouch type secondary battery.

The case tray 20 supports the battery module 10, and may be mounted on machine or instrument that uses the battery pack 1 as an energy source. For example, the case tray 20 may be mounted on a vehicle such as an electric vehicle.

A tray fastening hole 25 is provided in the case tray 20.

A fastening member B that will be described below is fastened through the tray fastening hole 25. The tray fastening hole 25 is provided in plurality. The plurality of tray fastening holes 25 are disposed along the edge of the case tray 20 and are spaced apart from each other by a predetermined distance.

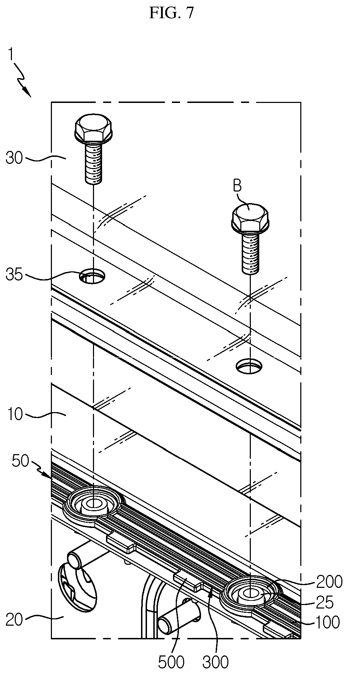

The case cover 30 is coupled to the case tray 20 through the fastening member B (see FIG. 7), etc. so that the battery module 20 is packaged. Such coupling of the case cover 30 and the case tray 20 through the fastening member B, etc. is performed in the edge of the case cover 30 and the edge of the case tray 20. Meanwhile, in the case of the EV truck or the EV bus, when the battery pack 10 is mounted on a position of an oil tank in a previous general truck or general bus in place of the oil tank, the assembly accuracy between the case tray 20 and the case cover 30 is further required.

A case fastening hole 35 is provided in the case cover 30.

The fastening member B passes through the case fastening hole 35. Such a case fastening hole 35 is provided in plurality. The plurality of case fastening holes 35 are disposed along the edge of the case cover 30 and are spaced apart from each other by a predetermined distance. The plurality of case fastening holes 35 are provided in positions corresponding to the plurality of tray fastening holes 25.

The sealing gasket 50 is for sealing the battery pack 1 and is disposed between the case tray 20 and the case cover 30 to prevent penetration of moisture or foreign substances into the battery module 10.

Such a sealing gasket 50 is disposed between the edge of the case tray 20 and the edge of the case cover 30. Such a sealing gasket 50 is coupled together with the case tray 20 and the case cover 30 through the fastening members B.

At least one position guider 500 guiding positioning between the case tray 20 and the case cover 30 when the case tray 20 and the case cover 30 are coupled to each other may be provided in the sealing gasket 50.

Hereinafter, the sealing gasket 50 according to the present embodiment will be described in more detail.

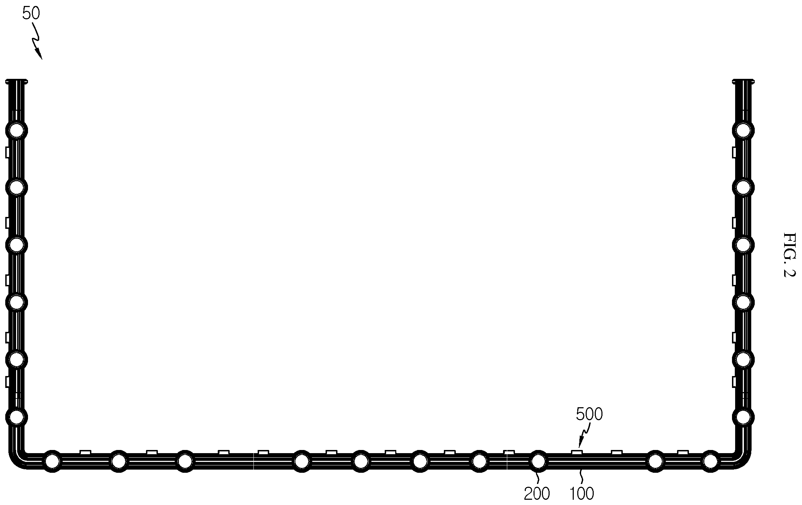

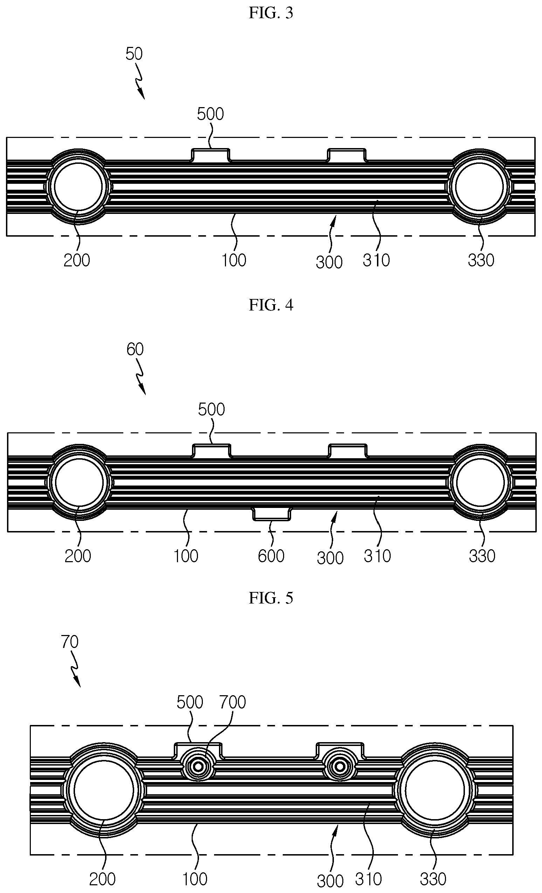

FIG. 2 is a view for explaining a sealing gasket of the battery pack of FIG. 1, and FIG. 3 is an enlarged view of a main part of the sealing gasket of FIG. 2.

Referring to FIGS. 2 and 3, the sealing gasket 50 may include a gasket band 100, a fastening portion 200, an elastic bead 300, and the at least one position guider 500.

The gasket band 100 is formed to correspond to shapes of the edge of the case tray 20 and the edge of the case cover 30. Such a gasket band 100 may have a predetermined length and may be made of a rubber material, etc.

The fastening portion 200 is provided in plurality. The plurality of fastening portions 200 are formed on the gasket band 100, and the fastening members B for coupling of the case tray 20 and the case cover 30 may pass therethrough.

The elastic bead 300 is to further improve a sealing performance of the sealing gasket 50, and may be formed on an outer circumferential surface of the gasket band 100. Such an elastic bead 300 is elastically deformable while being pressed by the case tray 20 and the case cover 30 when the case tray 20 and the case cover 30 are coupled to each other.

Such an elastic bead 300 includes a band bead 310 and a fastening bead 330.

The band bead 310 is formed on an outer circumferential surface of the gasket band 100. Such a band bead 310 is formed long in a longitudinal direction of the gasket band 100.

The fastening beads 330 are provided in plurality. The plurality of fastening beads 330 are formed on outer circumferential surfaces of the plurality of fastening portions 200. The plurality of fastening beads 330 have a shape corresponding to the shape of the plurality of fastening portions 200.

The at least one position guider 500 is provided between the plurality of fastening portions 200, and protrudes from the gasket band 100 by a predetermined length in a direction perpendicular to the longitudinal direction of the gasket band 100.

The at least one position guider 500 has a protrusion length that is at least the same as a protrusion length of the plurality of fastening portions 200. In addition, the at least one position guider 500 protrudes so as not to exceed edge lines of the case tray 20 and the case cover 30.

The protrusion length of the at least one position guider 500 is a preset protrusion length for correct positioning of the sealing gasket 50. The preset protrusion length is at least the same protrusion length as the protrusion length of the plurality of fastening portions 200 or is a protrusion length disposed near on the lines of the case tray 20 and the case cover 30 so as not to exceed the edge lines of the case tray 20 and the case cover 30.

The at least one position guider 500 may be spaced apart from the band bead 310 so as not to interfere with the band bead 310.

The position guider 500 may be provided in plurality.

The plurality of position guiders 500 are provided in at least one or more position guiders 500 between the plurality of fastening portions 200. Such a plurality of position guiders 500 are disposed to be spaced apart from each other by a predetermined distance in the longitudinal direction of the gasket band 100.

Through the plurality of position guiders 500, when the sealing gasket 50 is disposed between the case tray 20 and the case cover 30, a manufacturer, etc., may quickly determine whether the sealing gasket 50 is disposed in a correct position by easily checking positions of the plurality of position guiders 500 with the naked eye.

FIG. 4 is a view for explaining a sealing gasket according to another embodiment of the present disclosure.

A sealing gasket 60 according to the present embodiment is similar to the sealing gasket 50 of the previous embodiment, and thus redundant descriptions of components substantially the same as or similar to those of the previous embodiment will be omitted, and hereinafter, differences between the present embodiment and the previous embodiment will be explained.

Referring to FIG. 4, the sealing gasket 60 includes the gasket band 100, the fastening portions 200, the elastic bead 300, the position guider 500, and an additional guider 600.

The gasket band 100 and the fastening portions 200 are substantially the same as or similar to those of the previous embodiment, and thus redundant descriptions thereof will be omitted below.

The elastic bead 300 includes a band bead 310 and a fastening bead 330.

The band bead 310 and the fastening bead 330 are substantially the same as or similar to those of the previous embodiment, and thus redundant descriptions thereof will be omitted below.

The position guider 500 is substantially the same as or similar to that of the previous embodiment, and thus a redundant description thereof will be omitted below.

The additional guider 600 protrudes from the gasket band 100 by a predetermined length and may be disposed in a direction opposite to the position guider 500. Such an additional guider 600 protrudes at least by the same length as that of the position guider 500.

The additional guider 600 guides positioning of the sealing gasket 50 together with the position guider 500. The manufacturer, etc. may more accurately determine a position of the sealing gasket 50 upon assembling of the sealing gasket 50 through the additional guider 600 together with the position guider 500, thereby realizing more accurate positioning of the sealing gasket 50 during a manufacturing process of the battery pack 10.

FIG. 5 is a view for explaining a sealing gasket according to another embodiment of the present disclosure.

A sealing gasket 70 according to the present embodiment is similar to the sealing gasket 50 of the previous embodiment, and thus redundant descriptions of components substantially the same as or similar to those of the previous embodiment will be omitted, and hereinafter, differences between the present embodiment and the previous embodiment will be mainly explained.

Referring to FIG. 5, the sealing gasket 70 includes the gasket band 100, the fastening portions 200, the elastic bead 300, the position guider 500, and a guide bead 700.

The gasket band 100 and the fastening portions 200 are substantially the same as or similar to those of the previous embodiment, and thus redundant descriptions thereof will be omitted below.

The elastic bead 300 includes the band bead 310 and the fastening bead 330.

The band bead 310 and the fastening bead 330 are substantially the same as or similar to those of the previous embodiment, and thus redundant descriptions thereof will be omitted below.

The position guider 500 is substantially the same as or similar to that of the previous embodiment, and thus a redundant description thereof will be omitted below.

The guide bead 700 is provided on the gasket band 100, and is provided at a position close to the position guider 500. Such a guide bead 700 is provided in an approximately circular shape.

The guide bead 700 further improves a sealing performance of the sealing gasket 50 together with the elastic bead 300. The guide bead 700 is elastically deformable while being pressed by the case tray 20 and the case cover 30, together with the elastic bead 300, when the case tray 20 and the case cover 30 are coupled to each other.

Hereinafter, an assembly process of the sealing gasket 50 when the case tray and the case cover of the battery pack 10 according to the present embodiment are coupled to each other will be described in more detail.

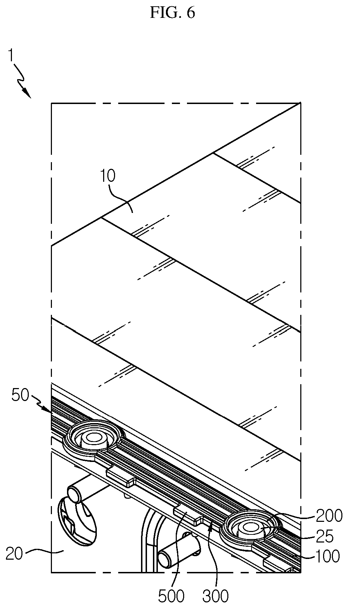

FIGS. 6 and 7 are views for explaining an assembly process of a sealing gasket when the case tray and the case cover of the battery pack of FIG. 1 are coupled to each other.

Referring to FIGS. 6 and 7, during a manufacturing process of the battery pack 1, the manufacturer, etc. makes the battery module 10 seated in the case tray 20 and then couple the case tray 20 and the case cover 30 to each other through the fastening members B.

The manufacturer, etc. may make the sealing gasket 50 seated on the edge of the case tray 20 and the edge of the case cover 30, and integrate and fasten through the case cover 30, the sealing gasket 50, and the case tray 20 through the fastening members B, for sealing of the battery pack 1.

At this time, in order to prevent deterioration of the sealing performance due to an erroneous assembly or a distortion of the sealing gasket 50 due to the erroneous assembly, it is important that the sealing gasket 20 is disposed in the correct position on the edge of the case tray 20 and the edge of the case cover 30.

In the present embodiment, through the plurality of position guiders 500, when the sealing gasket 50 is seated on the case tray 20, the manufacturer, etc., may easily check whether the sealing gasket 50 is seated in the correct position by simply checking positions of the plurality of position guiders 500 of the sealing gasket 50 with the naked eye.

Accordingly, the manufacturer, etc., may make the sealing gasket 50 disposed in the correct position through the position guider 500, and then, integrate and fasten through the case cover 30, the sealing gasket 50, and the case tray 20 through the fastening members B.

Therefore, in the present embodiment, when the battery pack 1 is manufactured, the erroneous assembly of the sealing gasket 50 is prevented more simply and quickly through the position guider 500.

Accordingly, in the present embodiment, it is possible to prevent the erroneous assembly of the sealing gasket 50 or damage due to the erroneous assembly through the position guider 500.

Accordingly, in the present embodiment, it is possible to effectively guide the correct position assembly of the sealing gasket 50 through the position guider 500, thereby more fundamentally preventing deterioration of the sealing performance due to the erroneous assembly of the sealing gasket 50.

In addition, in the present embodiment, even if the sealing gasket 50 is erroneously assembled due to a mistake of the manufacturer, etc., in checking positions with naked eye, as the position guider 500 is spaced apart from the elastic bead 300, there is no interference problem with the elastic bead 300 that is compressed upon fastening through the fastening member B or the interference problem is minimized, and thus it is possible to effectively prevent the deterioration of the sealing performance due to the distortion of the sealing gasket 50.

Also, in FIGS. 6 and 7, it has been described only with respect to the sealing gasket 50, but the sealing gaskets 60 and 70 of the previous embodiments may also prevent the erroneous assembly and realizing the correct positioning effect like the sealing gasket 50.

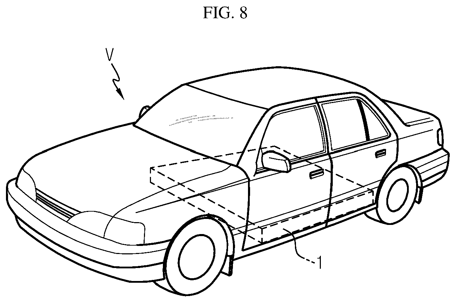

FIG. 8 is a view for explaining a vehicle according to an embodiment of the present disclosure.

Referring to FIG. 8, the battery pack 1 is provided in a vehicle V, as a fuel source of the vehicle. As an example, the battery pack 1 is provided in an electric vehicle, a hybrid vehicle, and the vehicle V in other methods of using the other battery pack 1 as a fuel source.

In addition, the battery pack 1 may be provided in other devices such as an energy storage system that uses a secondary battery, instruments, and facilities, in addition to the vehicle V.

As such, the vehicle V according to the present embodiment and devices such as the vehicle V, instruments, and facilities including the battery pack 1 include the battery module 10 described above, and thus the battery pack 1 having all the advantages owing to the battery module 10 described above and devices such as the vehicle V, instruments, and facilities including such a battery pack 1 may be implemented.

According to various embodiments as described above, the battery pack 1 capable of increasing an assembly accuracy of the sealing gaskets 50, 60, and 70 for realizing a solid watertight structure and the vehicle V including such a battery pack 1 may be provided.

In addition, according to various embodiments as described above, even if an erroneous assembly of the sealing gaskets 50, 60, and 70 occurs, the battery pack 1 capable of effectively preventing deterioration of sealing performance and the vehicle V including such a battery pack 1 is provided.

The present disclosure has been described in detail. However, it should be understood that the detailed description and specific examples, while indicating preferred embodiments of the disclosure, are given by way of illustration only. The scope of protection is defined by the appended claims.

## Claims

1. A battery pack(1) comprising:
at least one battery module (10) comprising at least one battery cell (15);
a case tray (20) configured to support the at least one battery module (10);
a case cover (30) coupled to the case tray (20) such that the at least one battery module (10) is packaged; and
a sealing gasket (50) disposed between the case tray (20) and the case cover (30) to prevent penetration of moisture or foreign substances into the battery module (10), and comprising at least one position guider (500) configured to guide positioning between the case tray (20) and the case cover (30) when the case tray (20) and the case cover (30) are coupled to each other,
wherein the sealing gasket (50) is disposed between an edge of the case tray (20) and an edge of the case cover (30),
wherein the sealing gasket (50) comprises:
a gasket band (100) formed to correspond to shapes of the edge of the case tray (20) and the edge of the case cover (30);
a plurality of fastening portions (200) formed on the gasket band (100) and through which fastening members (B) for the coupling of the case tray (20) and the case cover (30) pass;
**characterized in that** the at least one position guider (500) provided between the plurality of fastening portions (200) and configured to protrude from the gasket band (100) in a direction perpendicular to the longitudinal direction of the gasket band (100) by a predetermined length.

2. The battery pack (1) of claim 1,
wherein the sealing gasket (50) further comprises an elastic bead (300) formed on an outer circumferential surface of the gasket band (100) and elastically deformable when the case tray (20) and the case cover (30) are coupled to each other.

3. The battery pack (1) of claim 2,
wherein the elastic bead (300) comprises:
a band bead (310) formed on the outer circumferential surface of the gasket band (100); and
a fastening bead (330) formed on outer circumferential surfaces of the plurality of fastening portions (200).

4. The battery pack (1) of claim 3,
wherein the at least one position guider (500) is spaced apart from the band bead (310) so as not to interfere with the band bead (310).

5. The battery pack (1) of claim 3,
wherein the band bead (310) is formed in a longitudinal direction of the gasket band (100).

6. The battery pack of claim 3,
wherein the at least one position guider (500) has a protrusion length that is at least same as protrusion lengths of the plurality of fastening portions (200) so as not to exceed edge lines of the case tray (20) and the case cover (30).

7. The battery pack (1) of claim 1,
wherein the position guider (500) is provided in plurality, and
wherein the plurality of position guiders (500) are provided as at least one or more position guiders (500) between the plurality of fastening portions (200).

8. A vehicle (V) comprising at least one battery pack (1) according to claim 1.

## Patentansprüche

1. Batteriepack (1), umfassend:
wenigstens ein Batteriemodul (10), welches wenigstens eine Batteriezelle (15) umfasst;
eine Gehäuseablage (20), welche dazu eingerichtet ist, das wenigstens eine Batteriemodul (10) zu haltern;
eine Gehäuseabdeckung (30), welche mit der Gehäuseablage (20) gekoppelt ist, so dass das wenigstens eine Batteriemodul (10) verpackt ist; und
eine Dichtung (50), welche zwischen der Gehäuseablage (20) und der Gehäuseabdeckung (30) angeordnet ist, um ein Eindringen von Feuchtigkeit oder Fremdstoffen in das Batteriemodul (10) zu verhindern, und welche eine Positionsführung (500) umfasst, welche dazu eingerichtet ist, eine Positionierung zwischen der Gehäuseablage (20) und der Gehäuseabdeckung (30) zu führen, wenn die Gehäuseablage (20) und die Gehäuseabdeckung (30) miteinander gekoppelt sind,
wobei die Dichtung (50) zwischen einem Rand der Gehäuseablage (20) und einem Rand der Gehäuseabdeckung (30) angeordnet ist,
wobei die Dichtung (50) umfasst:
ein Dichtungsband (100), welches gebildet ist, um Formen des Rands der Gehäuseablage (20) und des Rands der Gehäuseabdeckung (30) zu entsprechen;
eine Mehrzahl von Befestigungsabschnitten (200), welche an dem Dichtungsband (100) gebildet sind und durch welche Befestigungselemente (B) für die Kopplung der Gehäuseablage (20) und der Gehäuseabdeckung (30) verlaufen;
**dadurch gekennzeichnet, dass** die wenigstens eine Positionsführung (500) zwischen der Mehrzahl von Befestigungsabschnitten (200) bereitgestellt ist und dazu eingerichtet ist, um eine vorbestimmte Länge von dem Dichtungsband (100) in einer Richtung hervorzustehen, welche senkrecht zu der longitudinalen Richtung des Dichtungsbands (100) ist.

2. Batteriepack (1) nach Anspruch 1,
wobei die Dichtung (50) ferner eine elastische Wulst (300) umfasst, welche an einer äußeren Umfangsfläche des Dichtungsbands (100) gebildet ist und welche elastisch deformierbar ist, wenn die Gehäuseablage (20) und die Gehäuseabdeckung (30) miteinander gekoppelt sind.

3. Batteriepack (1) nach Anspruch 2,
wobei die elastische Wulst (300) umfasst:
eine Bandwulst (310), welche an der äußeren Umfangsfläche des Dichtungsbands (100) gebildet ist; und
eine Befestigungswulst (330), welche an äußeren Umfangsflächen der Mehrzahl von Befestigungsabschnitten (200) gebildet ist.

4. Batteriepack (1) nach Anspruch 3,
wobei die wenigstens eine Positionsführung (500) von der Bandwulst (310) beabstandet ist, um die Bandwulst (310) nicht zu beeinträchtigen.

5. Batteriepack (1) nach Anspruch 3,
wobei die Bandwulst (310) in einer longitudinalen Richtung des Dichtungsbands (100) gebildet ist.

6. Batteriepack nach Anspruch 3,
wobei die wenigstens eine Positionsführung (500) eine Vorsprungslänge aufweist, welche wenigstens gleich zu Vorsprungslängen der Mehrzahl von Befestigungsabschnitten (200) ist, um Randlinien der Gehäuseablage (20) und der Gehäuseabdeckung (30) nicht zu überschreiten.

7. Batteriepack (1) nach Anspruch 1,
wobei die Positionsführung (500) in einer Mehrzahl bereitgestellt ist, und
wobei die Mehrzahl von Positionsführungen (500) als wenigstens eine oder mehrere Positionsführungen (500) zwischen der Mehrzahl von Befestigungsabschnitten (200) bereitgestellt sind.

8. Fahrzeug (V), umfassend wenigstens einen Batteriepack (1) nach Anspruch 1.

## Revendications

1. Bloc-batterie (1) comprenant :
au moins un module de batterie (10) comprenant au moins une cellule de batterie (15) ;
un plateau de boîtier (20) configuré pour supporter l'au moins un module de batterie (10) ;
un couvercle de boîtier (30) couplé au plateau de boîtier (20) de sorte que l'au moins un module de batterie (10) soit encapsulé ; et
un joint d'étanchéité (50) disposé entre le plateau de boîtier (20) et le couvercle de boîtier (30) pour empêcher la pénétration d'humidité ou de substances étrangères dans le module de batterie (10), et comprenant au moins un guide de position (500) configuré pour guider le positionnement entre le plateau de boîtier (20) et le couvercle de boîtier (30) lorsque le plateau de boîtier (20) et le couvercle de boîtier (30) sont couplés l'un à l'autre,
dans lequel le joint d'étanchéité (50) est disposé entre un bord du plateau de boîtier (20) et un bord du couvercle de boîtier (30),
dans lequel le joint d'étanchéité (50) comprend :
une bande de joint (100) formée pour correspondre à des formes du bord du plateau de boîtier (20) et du bord du couvercle de boîtier (30) ;
une pluralité de parties de fixation (200) formées sur la bande de joint (100) et à travers lesquelles passent des éléments de fixation (B) pour le couplage du plateau de boîtier (20) et du couvercle de boîtier (30) ;
**caractérisé en ce que** l'au moins un guide de position (500) disposé entre la pluralité de parties de fixation (200) et configuré pour faire saillie à partir de la bande de joint (100) dans une direction perpendiculaire à la direction longitudinale de la bande de joint (100) d'une longueur prédéterminée.

2. Bloc-batterie (1) selon la revendication 1,
dans lequel le joint d'étanchéité (50) comprend en outre un bourrelet élastique (300) formé sur une surface circonférentielle externe de la bande de joint (100) et pouvant être déformé élastiquement lorsque le plateau de boîtier (20) et le couvercle de boîtier (30) sont couplés l'un à l'autre.

3. Bloc-batterie (1) selon la revendication 2,
dans lequel le bourrelet élastique (300) comprend :
un bourrelet de bande (310) formé sur la surface circonférentielle externe de la bande de joint (100) ; et
un bourrelet de fixation (330) formé sur des surfaces circonférentielles externes de la pluralité de parties de fixation (200).

4. Bloc-batterie (1) selon la revendication 3,
dans lequel l'au moins un guide de position (500) est espacé du bourrelet de bande (310) de façon à ne pas interférer avec le bourrelet de bande (310).

5. Bloc-batterie (1) selon la revendication 3,
dans lequel le bourrelet de bande (310) est formé dans une direction longitudinale de la bande de joint (100).

6. Bloc-batterie selon la revendication 3,
dans lequel l'au moins un guide de position (500) présente une longueur de saillie qui est au moins identique à des longueurs de saillie de la pluralité de parties de fixation (200) de façon à ne pas dépasser des lignes de bord du plateau de boîtier (20) et du couvercle de boîtier (30).

7. Bloc-batterie (1) selon la revendication 1,
dans lequel le guide de position (500) est fourni en une pluralité, et
dans lequel la pluralité de guides de position (500) sont fournis sous la forme d'au moins un ou plusieurs guides de position (500) entre la pluralité de parties de fixation (200).

8. Véhicule (V) comprenant au moins un bloc-batterie (1) selon la revendication 1.
